# EUROPEAN PATENT APPLICATION

(11) **EP 4 806 636 A1**
(43) Date of publication of application: **16.09.2026**
(21) Application number: 25162640.4
(22) Date of filing: 10.03.2025
(51) Int. Cl.: B32B 27/08, B32B 27/32

(54) **POLYOLEFIN COMPOSITIONS OBTAINED FROM RECYCLED POLYOLEFINS**

(71) Applicant: Basell Poliolefine Italia S.r.l., 20121 Milano (IT)
(72) Inventor: CAVALIERI, Claudio, 44122 Ferrara (IT)
(74) Representative: LyondellBasell

(57) **Abstract**

A multilayer film comprising at least one core layer comprising a polypropylene composition comprising:
A) from 55 wt% to 85 wt%; of a recycled a recycled polypropylene
B) from 15 wt% to 45 wt%; of a virgin polypropylene composition comprising:
- (b1) from 75 wt% to 95 wt%, of a propylene homopolymer,
- (b2) from 5 wt% to 25 wt%; of a copolymer of propylene and ethylene.

## Description

### FIELD OF THE INVENTION

The present invention relates to a polymer film especially suitable for the packaging of food containing recycled polymeric material.

### BACKGROUND OF THE INVENTION

It is well known that polypropylene films, and particularly biaxially oriented polypropylene films (BOPP), are widely used for the packaging of foodstuff using automatic machines. In fact, the said films are characterized by a particular good balance of processability ("machinability"), optical and mechanical properties, and low permeability to gases, in particular oxygen and carbon dioxide, and water vapor.

In addition, polypropylene films, although being appreciated in terms of performances, give raise to concerns in terms of sustainability with particular reference to the fact that their production is based on the use of non-renewable sources.

As a result, a common attempt to mitigate the problem is that of replacing, at least in part, virgin polyolefin compositions with variable amounts of recycled plastic materials.

The recycled plastic polyolefin derives from streams of post-consumer waste (PCW) or post-industrial waste (PIW).

One of the key problems in polyolefin recycling, is the difficulty to quantitatively separate the various types of polymers so that the commercially available recycled products are almost invariably contaminated with heterogeneous materials of various source.

This fact leads to the consequence that polymer compositions including recycled materials are perceived of being affected by lower reliability and lower performances with respect to the compositions made of solely virgin polymers.

It has now been unexpectedly found that it is possible to produce a multilayer film wherein the core layer comprises a recycled polypropylene with reduced migration of contaminant.

### SUMMARY OF THE INVENTION

Thus, the present disclosure provides a multilayer film comprising at least one core layer comprising a polypropylene composition comprising:
A) from 55 wt% to 85 wt%; preferably from 60 wt% to 80 wt%; more preferably from 65 wt% to 75 wt%; of a recycled a recycled polypropylene (r-PP) having the following features:
   a propylene derived units content, measured with ¹³C-NMR, higher than 60 wt%, preferably higher than 65 wt%; even more preferably higher than 70 wt%;
   an ethylene derived units content, measured with ¹³C-NMR, comprised between 1.5 wt% and 20.3 wt%, preferably comprised between 3.0 wt% and 18.2 wt%, more preferably comprised between 5.5 wt% and 16.4 wt%,
   Melt Flow Rate (ISO 1133 230°C/2.16 kg) ranging from 0.2 to 20 g/10min; preferably ranging from 1 to 15 g/10min; more preferably ranging from 3 to 10 g/10min;
   a fraction soluble in xylene at 25°C, determined according to ISO 16152: 2005, lower than 15.0 wt%; preferably lower than 13.0 wt%; more preferably lower than 11.0 wt%; preferably being higher than 4.0 wt%
   Flexural modulus, measured according to ISO 527-2, ranging from 820N/mm² to 1720 N/mm²;
   preferably ranging from 950 N/mm² to 1550 N/mm²; more preferably ranging from 1050 N/mm² to 1480 N/mm²;
   Charpy impact test at 23°C, determined according to ISO 179-1eA, and ISO 1873-2, ranging from 2.2 KJ/m² to 13.0 KJ/m²; preferably ranging from 3.4 KJ/m² to 10.2 KJ/m²; more preferably ranging from 4.0 KJ/m² to 8.3 KJ/m²
   Elongation at break, measured according To ISO 527, ranging from 50 % to 200 %;preferably ranging from 75 % to 180 %; more preferably ranging from 95 % to 160 %.
   the FTIR spectrum of film recorded as described in the example section shows at least two peaks at different wavenumbers (cm-1) selected from:
      3303 ±1 cm⁻¹; 1726 ±1 cm⁻¹; 1642 ±1 cm⁻¹; 1600 ±1 cm⁻¹; 1550 ±1 cm⁻¹; 906 ±1 cm⁻¹; 839 ±1 cm⁻¹, 818 ±1 cm^{-1;} 748 ±1 cm⁻¹; 695 ±1 cm⁻¹;
B) from 15 wt% to 45 wt%; preferably from 20 wt% to 40 wt%; more preferably from 25 wt% to 35 wt%; of a virgin polypropylene composition comprising:
   - (b1) from 75 wt% to 95 wt%, preferably from 81 wt% to 93 wt%; more preferably from 85 wt% to 92 wt% of a propylene homopolymer, having:
   - a fraction soluble in xylene at 25°C lower than 6.0 wt%; preferably lower than 3.0 wt%; more preferably lower than 2.8 wt%; even more preferably lower than 2.2 wt%; preferably being higher than 0.5 wt% and
   - a Melt Flow Rate (ISO 1133 230°C/5.0 kg) ranging from 0.1 to 6.0 g/10min; preferably ranging from 0.5 to 2.5 g/10min; more preferably ranging from 0.6 to 1.7 g/10min;
   - (b2) from 5 wt% to 25 wt%; preferably from 7 wt% to 19 wt%; more preferably from 8 wt% to 15 wt% of a copolymer of propylene and ethylene having:
   - units derived from ethylene, measured according to ¹³C-NMR, in an amount ranging from 25.0 wt% to 68.0 wt%; preferably from 35.0 wt% to 68.0 wt%; more preferably ranging from 41.0 wt% to 57.0 wt%; even more preferably ranging from 46.0 wt% to 54.0 wt %;
   said polypropylene composition (B) being further characterized by:
   - a Melt Flow Rate (ISO 1133 230°C/5.0 kg) ranging from 0.4 to 5.0 g/10 min; preferably from 0.4 to 3.0 g/10min; more preferably ranging from 0.5 to 2.50 g/10min; even more preferably ranging from 0.6 to 1.7 g/10min;
   - an amount of fraction soluble in xylene at 25°C ranging from 7.0 wt% to 18.0 wt%; preferably from 8.0 wt% to 16.0 wt% ; more preferably from 8.5 wt% to 12.4 wt%;
   - intrinsic viscosity fraction soluble in xylene at 25°C, measured in tetrahydronaphthalene at 135 °C, ranging from 1.2 to 7.5 dl/g; preferably from 3.0 to 7.5 dl/g; more preferably ranging from 3.5 to 5.5 dl/g; even more preferably ranging from 3.7 to 5.2 dl/g and,
   - total content of ethylene measured according to ¹³C-NMR method described in the specification, ranging from 4.0 wt% to 10.0 wt%; preferably from 4.0 wt% to 7.0 wt%; more preferably ranging from 4.2 wt% to 5.8 wt%; even more preferably ranging from 4.5 wt% to 5.4 wt%;
in the said composition the sum of b1) and b2), being referred to the total weight of b1) and b2), is 100, and the sum of the amounts of (A) and (B) being referred to the total weight of (A) and (B) is 100.

### BRIEF DESCRIPTION OF THE DRAWINGS

Fig 1 shows the FTIR spectrum of component A) used in the examples.

### DETAILED DESCRIPTION OF THE INVENTION

The term "copolymer" as used herein refers to polymers with two different recurring units.
The term "recycled" is referred to material containing polymers whose pellets have been processed more than one time. On the contrary the term "virgin" means that the polymers pellets do not have been processed.

Component a) can be a Post-Industrial Resin (PIR) or Post-Consumer Resin (PCR).

Post-Industrial Resin (PIR) is the waste generated from the manufacturing process that is reclaimed or used again in the same material.

Post-Consumer Resin (PCR) defined as a resin used by the consumer for its intended purpose, which has reached its end of use, and then tossed into a recycling bin is excluded.

Preferably recycled propylene-based polymers contains from 0.1 ppm to 25 ppm of limonene.

The recycled polypropylene composition of the present disclosure can further contains other polypropylene or polyethylene based polymers component c), preferably virgin polypropylene based polymers, such as propylene homopolymer, propylene ethylene copolymer having an ethylene derived units content ranging from 0.5 wt% to 10.0 wt%, heterophasic propylene ethylene copolymer having a xylene soluble fraction at 25°C ranging from 8.0 wt% to 50.0 wt% or propylene ethylene 1-butene terpolymer or propylene ethylene 1-hexene terpolymer.

The term "consisting essentially of", as used herein in connection with a polymer or polymer composition means that, in addition to those components which are mandatory, other components may also be present in the polymer or in the polymer composition, provided that the essential characteristics of the polymer or of the composition are not materially affected by their presence. According to the present disclosure, examples of components that, when present in customary amounts in a polymer or in a polymer composition, do not materially affect their characteristics are the catalyst residues, antistatic agents, melt stabilizers, light stabilizers, antioxidants, antiacids.

The features of the components forming the polypropylene composition are not inextricably linked to each other. This means that a certain level of preference of one the features should not necessarily involve the same level of preference of the remaining features of the same or different components. On the contrary, it is intended in the present disclosure that any component (A) to (B) and any preferred range of features of components (A) to (B) can be combined with any preferred range of one or more of the features of components (A) to (B) and with any possible additional component, and its features, described in the present disclosure.

For the present disclosure "core layer" means the layer in a multilayer film that has no contact with the external environment, such as a film A/B/A wherein B is the core layer.

The multilayer films of the present disclosure are characterized by having at least one of the core layers comprising the polypropylene composition of the present disclosure. The remaining layers can be formed of any material known in the art for use in multilayer films or in laminated products. Thus, for example, each layer can be formed of a polypropylene homopolymer or copolymer or polyethylene homopolymer or copolymer or other kind of polymers such as EVA. Preferably the outer layer can comprise homopolymer of propylene such as Mollen HP522H, Moplen HP520H, Moplen HP525J, Moplen HP740J or Moplen HP526J.

The combination and number of layers of the multilayer structures described are not limited. For instance, the multilayer structure can comprises 3- 11 layers or more, including 3-9 layers, 3-7 layers, and 3-5 layers, with combinations including A/B/A, A/B/C, A/B/C/B/A, and A/B/C/D/C/B/A, provided that at least one core layer such as B or D comprises a propylene composition of the present disclosure.

The number of layers of the multilayer film of the present disclosure can preferably be 3 or 5, wherein at least one core layer comprises the propylene composition of the present disclosure. For instance, structures such as A/B/A or A/B/C, wherein B is the propylene composition of the present disclosure, are possible.

The melting temperature of the component b1), determined via DSC, preferably ranges from 155°C to 165°C.

Component B) can be prepared by polymerizing propylene, optionally in mixture with ethylene in the presence of a catalyst comprising the product of the reaction between:
a) a solid catalyst component comprising Ti, Mg, Cl, and at least an internal electron donor compound;
   ii) an alkylaluminum compound and,
   iii) an external electron-donor compound having the general formula: (R⁷)ₐ(R⁸)_{b}Si(OR⁹)_{c}, where a and b are integers from 0 to 2, c is an integer from 1 to 4 and the sum (a+b+c) is 4; R⁷, R⁸, and R⁹, are alkyl, cycloalkyl or aryl radicals with 1-18 carbon atoms optionally containing heteroatoms.

The internal donor is preferably selected from the esters of mono or dicarboxylic organic acids such as benzoates, malonates, phthalates, and certain succinates. Examples of internal donors are described.

in US 4522930A, EP 045977A2 and international patent applications WO 00/63261 and WO 01/57099. Particularly suited are the phthalic acid esters and succinate acids esters. Alkylphthalates are preferred, such as di isobutyl, dioctyl and diphenyl phthalate and benzyl-butyl phthalate.

The particles of solid component (i) may have substantially spherical morphology and average diameter ranging between 5 and 150 µm, preferably from 20 to 100 µm and more preferably from 30 to 90 µm. As particles having substantially spherical morphology, those are meant wherein the ratio between the greater axis and the smaller axis is equal to or lower than 1.5 and preferably lower than 1.3.

The amount of Mg may preferably range from 8 to 30% more preferably from 10 to 25wt. %.

The amount of Ti may range from 0.5 to 7% and more preferably from 0.7 to 5wt. %.

According to one method, the solid catalyst component (i) can be prepared by reacting a titanium compound of formula Ti(OR)q-yXy, where q is the valence of titanium and y is a number between 1 and q, preferably TiCl4, with a magnesium chloride deriving from an adduct of formula MgCl2•pROH, where p is a number between 0.1 and 6, preferably from 2 to 3.5, and R is a hydrocarbon radical having 1-18 carbon atoms. The adduct can be suitably prepared in spherical form by mixing alcohol and magnesium chloride, operating under stirring conditions at the melting temperature of the adduct (100-130°C). Then, the adduct is mixed with an inert hydrocarbon immiscible with the adduct thereby creating an emulsion which is quickly quenched causing the solidification of the adduct in form of spherical particles. Examples of spherical adducts prepared according to this procedure are described in USP 4,399,054 and USP 4,469,648. The so obtained adduct can be directly reacted with Ti compound or it can be previously subjected to thermal controlled dealcoholation (80-130°C) so as to obtain an adduct in which the number of moles of alcohol is of lower than 3, preferably between 0.1 and 2.5. The reaction with the Ti compound can be carried out by suspending the adduct (dealcoholated or as such) in cold TiCl4; the mixture is heated up to 80-130°C and kept at this temperature for 0.5-2 hours. The treatment with TiCl4 can be carried out one or more times. The electron donor compound can be added in the desired ratios during the treatment with TiCl4.

The alkyl-Al compound (ii) is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as AlEt2Cl and Al2Et3Cl3, possibly in mixture with the above cited trialkylaluminums. The Al/Ti ratio is higher than 1 and may preferably range between 50 and 2000.

Particularly preferred are the silicon compounds (iii) in which a is 1, b is 1, c is 2, at least one of R7 and R8 is selected from branched alkyl, cycloalkyl or aryl groups with 3-10 carbon atoms optionally containing heteroatoms and R9 is a C1-C10 alkyl group, in particular methyl. Examples of such preferred silicon compounds are methylcyclohexyldimethoxysilane (C donor), diphenyldimethoxysilane, methyl-t-butyldimethoxysilane, dicyclopentyldimethoxysilane (D donor), diisopropyldimethoxysilane, (2-ethylpiperidinyl)t-butyldimethoxysilane, (2-ethylpiperidinyl)thexyldimethoxysilane, (3,3,3-trifluoro-n-propyl)(2-ethylpiperidinyl)dimethoxysilane, methyl(3,3,3-trifluoro-n-propyl)dimethoxysilane. Moreover, are also preferred the silicon compounds in which a is 0, c is 3, R8 is a branched alkyl or cycloalkyl group, optionally containing heteroatoms, and R9 is methyl. Examples of such preferred silicon compounds are cyclohexyltrimethoxysilane, t-butyltrimethoxysilane and thexyltrimethoxysilane.

The external electron donor compound (iii) is used in such an amount to give a molar ratio between the organoaluminum compound and said external electron donor compound (iii) of from 0.1 to 200, preferably from 1 to 100 and more preferably from 3 to 50.

Component B) can be prepared in a continuous sequential polymerization process, wherein component b1) is prepared in the first reactor and component (b2) is prepared in the second reactor in the presence of component b1) according to the known techniques and operating in gas phase, or in liquid phase in the presence or not of inert diluent, or by mixed liquid-gas techniques.

Component B) is preferably a commercial polymer grade such as Hostalen PP H2483 sold by LyondellBasell.

Component (A) can origin either from post-consumer waste (PostCW) or from pre-consumer waste (Pre-CW). Preferably, its origins from Pre-CW. The pre-consumer plastic is regarded as a plastic waste diverted from a manufacturing process which is not reutilized such as rework, regrind or scrap, and is not reincorporated in the same process that generated it.

If needed, the final composition comprising (A)+(B) can be subject to a chemical treatment with organic peroxides in order to lower the average molecular weight and increase the melt flow index up to the value needed for the specific application.

The whole polypropylene composition of the present disclosure preferably shows a tensile modulus value lower than that of component B). Preferably embodiment, the tensile modulus of the whole propylene polymer composition ranges from to 750 MPa to 1700 MPa more preferably from 900 to 1650 MPa.

The value of Charpy impact at 23°C ranges from 30.0 Kj/m² to 5.0 Kj/m² ; the value of Charpy impact at 0°C ranges from 2.0 Kj/m² to 10.0 Kj/m² ; the value of Charpy impact at - 20°C ranges from 1.0 Kj/m² to 7.0 Kj/m².

The whole propylene composition of the present disclosure can be obtained by mechanical blending of the components (A) and (B) according to conventional techniques.

The multilayer film of the present disclosure shows a low migration when the core layer is contaminated, This means that the multilayer film of the present disclosure even if it contains a recycled material can be advantageously used for the packaging of food in particular fresh foodstuff, like salad and vegetables.

All the film layers may also contain the additives that are commonly used for the film manufacturing, and especially for the films used for packaging applications with automatic machines, such as anti-oxidants, process stabilizers, slip agents, antistatic agents, antiblock agents, and antifog agents.

Independently from the structure of the film, the overall film thickness is preferably from 9 to 100 microns, the thickness of the layer(s) A) is preferably from 0.5 to 20 microns, and that of the layer(s) B), typically used as inner layer(s), is from 9.5 to 99.5 microns.

The said films are produced by using processes well known in the art.

In particular, extrusion processes can be used.

In said extrusion processes the polymer materials to be used for the various layers are molten in different extruders and extruded through a narrow die gap. Subsequent from the exit from the die, the material can be cooled, heated and optionally oriented in several ways or in combination. Examples of such processes are cast, blown, extrusion coating, uniaxially oriented, simultaneous biaxially oriented, and sequential biaxially oriented film processes.

Specific examples of such processes are the blown film and BOPP processes herein below explained.

### Blown Film

The molten polymer materials are forced through a circular shaped die.

The extrudate which is drawn off has the shape of a tube, which is inflated by air to form a tubular bubble. The bubble is cooled and collapsed before winding-up.

The blown film process is preferred for the preparation of the film of the present invention.

### BOPP

The molten polymer materials are forced continuously through a narrow die. The extruded molten material is pulled away from the die and cooled, then heated again and stretched both in the Machine Direction (MD) and in the Transverse Direction (TD). After the stretching process, the film is cooled and then wound-up.

Furthermore, as shown in the examples below, the composition employing the component B) shows a synergistic behavior with the component A. In fact, by adding component B) in the amounts according to the invention it is possible to obtain a copolymer having high impact values with relatively low modulus.

The polyolefin composition of the present disclosure shows a quite unique properties with low MFR, very high stiffness and good impact properties, guarantying an increased melt strength and good processability a good compatibilization of the different polymeric phases.

The following examples are given in order to illustrate, but not limit the present disclosure.

### EXAMPLES

### CHARACTERIZATIONS

### Determination of the composition of recycled polymer(PP repro) via 1H and 13C NMR

PP repro is a mixture of polymers having an aliphatic hydrocarbon backbone (ethylene - E), propylene - P), and 1-butene (B, < 1.0 wt%), 1-hexene (H, < 1.0 wt%) and 1-octene (O, < 1.0 wt%) copolymers and possibly an aromatic hydrocarbon backbone (polystyrene and polyethylene terephthalate). Due to analytical complications in determining the composition of aromatic containing polymers via ¹³C NMR spectroscopy, the method was developed by using the combination of the results obtained via ¹H and ¹³C NMR spectra. In particular ¹³C NMR was used to determine the relative amount of ethylene, propylene 1-butene, 1-hexene and 1-octene copolymers, while ¹H NMR provided a quantification of the composition of aliphatic and aromatic components and the relative amounts of polystyrene and polyethylene terephthalate when present.

¹³C NMR and ¹H spectra were acquired on a Bruker AV600 spectrometer equipped with cryo probe, operating at 150.91 MHz and 600.13 MHz respectively in the Fourier transform mode at 120 °C.

About 30 mg of sample were dissolved at 120°C in 0.5 ml of 1,1,2,2 tetrachloroethane-d2 added with 0.1 mg/ml of Irganox 1010 (AO 1010) as antioxidant

For 13C NMR spectra the peak of the Sδδ carbon (nomenclature according C.J. Carman, R.A. Harrington and C.E. Wilkes, Macromolecules, 10, 3, 536 (1977)) was used as internal reference at 29.9 ppm. Each spectrum was acquired with a 90 ° pulse, 15 seconds of delay between pulses and CPD to remove 1H-13C coupling. 512 transients were stored in 65 K data points using a spectral window of 9000 Hz.

For 1H NMR spectra the peak of the residual C2DHCl4 at 5.95 ppm was used as internal reference. Each spectrum was acquired with a 90° pulse, 5 seconds of delay between pulses and 128 transients stored in 64K data points using a spectral window of 9600 Hz.

### Evaluation of 13C NMR spectrum of Ethylene, Propylene, 1-Butene, 1-Hexene and 1-Octene copolymers

In the 13C NMR spectrum only the signals from Ethylene, Propylene, 1-Butene, 1-Hexene and 1-Octene copolymers were considered (assignments of peak relevant for quantification are reported in Table 1). Triad distribution (considering only EBE, EHE and EOE due to the low amount of these comonomers) was obtained from the integration of relevant peaks in 13C NMR spectrum (possible overlaps of the peaks of the antioxidant AO1010 were taken into account), using the following relations: $PPP = 100 {I}_{11} / Σ$ $for {I}_{3} / {I}_{4} < 1 : PPE = 100 {I}_{3} / Σ$ $for {I}_{3} / {I}_{4} < 1 : PPE = 100 \left({I}_{8}-6{I}_{4}\right) / Σ$ $EPE = 100 {I}_{7} / Σ$ $EBE = 100 {I}_{1} / Σ$ $EHE = 100 {I}_{6} / Σ$ $EOE = 100 \left({I}_{2}-{I}_{6}\right) / Σ$ $XEX = 100 {I}_{13} / Σ$ $XEE = 100 \left({I}_{12}-{I}_{2}\right) / Σ$ $EEE = 100 \left(0.5\left({I}_{10}-{I}_{2}\right)+0.25\left({I}_{9}+{I}_{8}\right)\right) / Σ$ Where: $Σ = {I}_{11} + \left({I}_{3} or \left({I}_{8}-{6 I}_{4}\right)\right) + {I}_{7} + {I}_{1} + {I}_{6} + {I}_{2} - {I}_{6} + {I}_{13} + {I}_{12} - {I}_{2} + 0.5 \left({I}_{10}-{I}_{2}\right) + 0.25 \left({I}_{9}+{I}_{8}\right)$ and Iₙ are the areas of the corresponding carbon following the numbering scheme reported in Table 1 and X can be propylene, 1-butene , 1-hexene or 1-octene

The molar content of Ethylene, Propylene, 1-Butene and 1-Octene is obtained from triads using the following relations: $P \left(m%\right) = PPP + PPE + EPE$ $B \left(m%\right) = EBE$ $H \left(m%\right) = EHE$ $O \left(m%\right) = EOE$ $E \left(m%\right) = EEE + XEE + XEX$

Molar content was transformed in weight using monomers molecular weight.

### Evaluation of 1H NMR spectrum

The molar content of Polyethylene terephthalate (PET), Polystyrene (PS) and ethylene/propylene/1-butene/1-hexene/1-octene copolymers were obtained from 1H spectra.

The aromatic hydrogen peaks of PET and PS (assignments according to Table 2) were used, while the amount of ethylene/propylene/1-Butene/1-Hexene/1-Octene copolymers was determined by the integral of all the aliphatic hydrogens, from which the contribution of the 3 aliphatic hydrogens of the polystyrene was subtracted.

Molar amounts of PET, PS and E/P/B/H/O copolymers were evaluated from the following relations: $PET = 100 0.25 {I}_{a} / Σ$ $PS = 100 0.5 {I}_{c} / Σ$ $Total aliphatic E / P / B / H / O copolymers = 100 0.5 \left({I}_{e}-3PS-9{I}_{d}\right) / Σ$ Where $Σ = 0.25 {I}_{a} + 0.5 {I}_{c} + 0.5 \left({I}_{d}-3PS-100 0.5 \left({I}_{e}-3PS-9{I}_{d}\right)/Σ\right.$

Molar content was transformed in weight percentage using monomers molecular weight considering the MW of CH2 to estimate the weight contribution from ethylene/propylene/1-butene/1-hexene/1-octene copolymers.

The weight content of P, E, B, H and O obtained from 13C spectrum was rescaled to obtain the weight percentage in the whole sample by multiplying each value (wt%) from triads with the rescaling factor "RF":

RF = [100-PET(wt%)-PS(wt%)]/100 where PET(wt%) and PS(wt%) are the compositions obtained from 1H spectrum.

**Table a) Assignments of the ¹³C NMR spectrum of Ethylene/Propylene/1-Octene/1-Butene copolymers**

| Table a | | | |
|---|---|---|---|
| Number | Chemical Shift (ppm) | Carbon | Sequence |
| 1 | 39.6 | T_{δδ} | EBE |
| 2 | 38.8 | T_{δδ} | EOE + EHE |
| 3 | 38.2 - 37.6 | S_{αγ} | PE |
| 4 | 36.2 | CH₂ | AO1010 |
| 6 | 34.0 | 4B₄ | EHE |
| 7 | 33.3 - 33.2 | T_{δδ} | EPE |
| 8 | 30.8 - 30.7 | T_{βδ} | PPE |
| 8 | 30.3 | S_{γδ} | XEEE |
| 9 | 30.2 | S_{γδ} | PEEE |
| 10 | 29.9 | S_{δδ} + 4B₆ | EEE + O |
| 11 | 28.8 - 28.2 | T_{ββ} | PPP |
| 12 | 27.4 - 26.7 | S_{βδ} + 5B₆ | XE+O |
| 13 | 24.7 - 24.1 | S_{ββ} | XEX |

**Table b Assignments of the ¹H NMR spectrum of Ethylene/Propylene/1-Butene/1-Hexene/1-Octene copolymers containing PS and PET**

| Number | Chemical Shift (ppm) | Proton | Sequence |
|---|---|---|---|
| a | 8.08 | CH | PET |
| b | 7.20 - 6.81 | CH | PS |
| c | 6.81 - 6.33 | CH | PS |
| d | 2.91 | CH₂ | AO1010 |
| e | 1.80 - 0.70 | CH + CH_{2 +} CH3 | Total aliphatic |
| | 1.25 | CH + CH₂ | PS |

### Ethylene (C2) content

### ¹³C NMR of propylene/ethylene copolymers components B) and C)

¹³C NMR spectra were acquired on a Bruker AV-600 spectrometer equipped with cryoprobe, operating at 160.91 MHz in the Fourier transform mode at 120°C.

The peak of the S_{ββ} carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as internal reference at 29.9 ppm. The samples were dissolved in 1,1,2,2-tetrachloroethane-d2 at 120°C with an 8 % wt/v concentration. Each spectrum was acquired with a 90° pulse, 15 seconds of delay between pulses and CPD to remove 1H-13C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride-diethylaluminum chloride" M. Kakugo, Y. Naito, K. Mizunuma and T. Miyatake, Macromolecules 1982, 15, 4, 1150-1152) using the following equations: $PPP = 100 {T}_{ββ} / S PPE = 100 {T}_{βδ} / S EPE = 100 {T}_{δδ} / S$ $PEP = 100 {S}_{ββ} / S PEE = 100 {S}_{βδ} / S EEE = 100 \left(0.25 {S}_{γδ}+0.5 {S}_{δδ}\right) / S$ $S = {T}_{ββ} + {T}_{βδ} + {T}_{δδ} + {S}_{ββ} + {S}_{βδ} + 0.25 {S}_{γδ} + 0.5 {S}_{δδ}$

The molar percentage of ethylene content was evaluated using the following equation:

E% mol = 100 * [PEP+PEE+EEE]The weight percentage of ethylene content was evaluated using the following equation: $E % wt . = \frac{100 * E % mol * {MW}_{E}}{E % mol * {MW}_{E} + P % mol * {MW}_{P}}$
where P% mol is the molar percentage of propylene content, while MW_{E} and MW_{P} are the molecular weights of ethylene and propylene, respectively.

The product of reactivity ratio *r*₁*r*₂ was calculated according to Carman (C.J. Carman, R.A. Harrington and C.E. Wilkes, Macromolecules, 1977; 10, 536) as: ${r}_{1} {r}_{2} = 1 + \left(\frac{EEE + PEE}{PEP}+1\right) - \left(\frac{P}{E}+1\right) {\left(\frac{EEE + PEE}{PEP}+1\right)}^{0.5}$

The tacticity of Propylene sequences was calculated as mm content from the ratio of the PPP mmT_{ββ} (28.90-29.65 ppm) and the whole T_{ββ} (29.80-28.37 ppm).

### Xylene-soluble (XS) Fraction at 25 °C

Xylene Solubles at 25°C have been determined according to ISO 16152: 2005.

### Melt Flow Rate (MFR)

Measured according to ISO 1133-1 at 230 °C with a load of 2.16 kg or 5 kg, as specified.

### Intrinsic Viscosity (IV)

The sample is dissolved in tetrahydronaphthalene at 135 °C and then poured into a capillary viscometer. The viscometer tube (Ubbelohde type) is surrounded by a cylindrical glass jacket; this setup allows for temperature control with a circulating thermostatic liquid. The downward passage of the meniscus is timed by a photoelectric device.

The passage of the meniscus in front of the upper lamp starts the counter which has a quartz crystal oscillator. The meniscus stops the counter as it passes the lower lamp and the efflux time is registered: this is converted into a value of intrinsic viscosity through Huggins' equation (Huggins, M.L., J. Am. Chem. Soc., 1942, 64, 2716) provided that the flow time of the pure solvent is known at the same experimental conditions (same viscometer and same temperature). One single polymer solution is used to determine [ η ].
**Polydispersity index:** Determined at a temperature of 200 °C by using a parallel plates rheometer model RMS-800 marketed by RHEOMETRICS (USA), operating at an oscillation frequency which increases from 0.1 rad/sec to 100 rad/sec. From the crossover modulus one can derive the P.I. by way of the equation: $P . I . = 105 / Gc$ in which Gc is the crossover modulus which is defined as the value (expressed in Pa) at which G'=G" wherein G' is the storage modulus and G" is the loss modulus.

### Samples for the mechanical tests

Samples have been obtained according to ISO 1873-2:2007.
**Charpy impact test** is determined according to ISO 179-1eA, and ISO 1873-2
**Elongation at yield:** measured according to ISO 527.
**Elongation at break:** measured according To ISO 527
**Stress at break:** measured according to ISO 527.
**Tensile Modulus** according to ISO 527-2,
**Tear Resistance** according to the method ASTM D 1004 on 1mm-thick extruded sheets. Crosshead speed: 51 mm/min; V-shaped die cut specimen.
**Shore D** on injection molded, compression molded plaques and extruded sheets according to the method ISO 868 (15 sec)

### Melting point and crystallization point

The melting point has been measured by using a DSC instrument according to ISO 11357-3, at scanning rate of 20C/min both in cooling and heating, on a sample of weight between 5 and 7 mg., under inert N₂ flow. Instrument calibration made with Indium.

### Example 1

### Component A)

The recycled polypropylene used as component A) is sold by polar, the features of the recycled polypropylene are reported on table 1.

**Table 1**

| | | |
|---|---|---|
| MFR 2.16 kg | g/10min | 4,81 |
| XS | wt% | 8 |
| Tm | °C | 161,3) |
| Tc | °C | 120,1 |
| Charpy 23 °C | KJ/m² | 6,3 |
| Charpy 0 °C | KJ/m² | 3,2 |
| tensile modulus | N/mm² | 1350 |
| Elongation at break 48h | % | 123 |
| D/B TT | °C | > 10 |
| C2- (NMR) | Wt% | 9,35 |
| C3 (NMR) | Wt% | >75 |

### C2 ethylene derived units

FTIR spectrum of film shows at least two peaks at different wavenumbers (cm-1) selected from: 3303 ±1 cm⁻¹; 1726 ±1 cm⁻¹; 1642 ±1 cm⁻¹; 1600 ±1 cm⁻¹; 1550 ±1 cm⁻¹; 906 ±1 cm⁻¹; 839 ±1 cm⁻¹, 818 ±1 cm^{-1;} 748 ±1 cm⁻¹; 695 ±1 cm⁻¹.

### Component B)

Component B is an heterophasic commercial grade sold by LyondellBasell, it can be synthesized according to the procedure known in the art, the property of component B) are set forth in table 2:

**Table 2**

| **Component B)** | | |
|---|---|---|
| component b1) | | |
| Xs | wt% | <2.0 |
| MFR 230°C/5 kg | g/10 min | 1.30 |
| split | wt% | 90 |

| component b2) | | |
|---|---|---|
| C2 content | wt% | 49.8 wt% |
| split | wt% | 10 |

| total composition | | |
|---|---|---|
| MFR 230°C/5 kg | g/10 min | 1.1 |
| Xs | wt% | 10.1 |
| IV on XS | dl/g | 3.9 |
| C2 content | wt% | 5.0 wt% |

| | | |
|---|---|---|
| Xs fraction soluble in xylene at 25°C C2 ethylene derived units IV intrinsic viscosity | | |

### Composition

70 wt% of component A) has been blended with 30 wt% of component B) in an extruder (Berstorff extruder),1000 ppm of M.S. 168 and 3000 ppm of DHT-4A based on the total weight of A + B have been added. The polymer particles are extruded under nitrogen atmosphere in a twin screw extruder, at a rotation speed of 250 rpm and a melt temperature of 200-250° C. The characterization of the obtained composition is reported in table 3.

**Table 3**

| **Examples 1** | | |
|---|---|---|
| MFR 2.16 kg | g/10min | 2 |
| XS | wt% | 8,8 |
| Tm | °C | 162 |
| Tc | °C | 120,8 |
| Charpy 23 °C | KJ/m² | 13,1 |
| Charpy 0 °C | KJ/m² | 5,6 |
| tensile modulus | N/mm² | **1570** |
| Stress at yield 48h | N/mm² | 30,5 |
| Elongation at yield 48h | % | 9,2 |
| Elongation at break 48h | % | 57 |

Contaminants: Phenylcyclohexane, and methylstearate have been adsorbed on pellets of the composition of table 3 by putting in contact the pellets with the compounds at 40°C under shaking for 15 days.

The concentrations of the contaminants were determined by N2 grinding followed by extraction in ultrasonic bath by using a suitable solvent. A GC-MS/MS triple quadrupole (Agilent 7000C and D) was used, equipped with a column Agilent HPMS UI 30 m/0.25 mm/0,25mm. The detection was performed in MRM (Multiple Reaction Monitoring) mode by identifying the typical transitions for each compound. Then starting concentration are reported on table 4.

**Table 4**

| Compound | | Content of contaminant |
|---|---|---|
| Phenylcyclohexane | mg/g | 979 ±111 |
| methylstearate | mg/g | 771±91 |

BOPP A/B/A films were produced. The A layer was made with Moplen HP740J, a commercial propylene homopolymer sold by LyondellBasell while the B layer was the contaminated composition of example 1.

The specific migrations of the employed contaminants were determined onto the samples after a conditioning time of 10 days at 40°C with some simulants covering foodstuff categories; acetic acid 3% w/v (B simulant) and ethanol 10% v/v (A simulant).

The concentrations of the contaminants in the simulants were determined by GC-MS/MS triple quadrupole (Agilent 7000C and D) equipped with a column Agilent HPMS UI 30 m/0.25 mm/0,25mm. The detection was performed in MRM (Multiple Reaction Monitoring) mode by identifying the typical transitions for each compound. The results are reported in Table 5.

**Table 5**

| Compound | Simulant A | Simulant B |
|---|---|---|
| Phenylcyclohexane | <0.01 | <0.01 |
| methylstearate | <0.01 | <0.01 |

The functional barrier efficiency is usually stated to a value of 0,01 mg/kg. Therefore, the film of example 1 meets the requisite for food contact.

## Claims

1. A multilayer film comprising at least one core layer comprising a polypropylene composition comprising:
A) from 55 wt% to 85 wt%; of a recycled a recycled polypropylene (r-PP) having the following features:
a propylene derived units content, measured with ¹³C-NMR, higher than 60 wt%;
an ethylene derived units content, measured with ¹³C-NMR, comprised between 1.5 wt% and 20.3 wt%;
Melt Flow Rate (ISO 1133 230°C/2.16 kg) ranging from 0.2 to 20 g/10min;
a fraction soluble in xylene at 25°C, determined according to ISO 16152: 2005, lower than 15.0 wt%
Flexural modulus, measured according to ISO 527-2, ranging from 820N/mm² to 1720 N/mm²;
Charpy impact test at 23°C, determined according to ISO 179-1eA, and ISO 1873-2, ranging from 2.2 KJ/m² to 13.0 KJ/m²;
Elongation at break, measured according to ISO 527, ranging from 50 % to 200 %;
the FTIR spectrum of film recorded as described in the example section shows at least two peaks at different wavenumbers (cm-1) selected from:
3303 ±1 cm⁻¹; 1726 ±1 cm⁻¹; 1642 ±1 cm⁻¹; 1600 ±1 cm⁻¹; 1550 ±1 cm⁻¹; 906 ±1 cm⁻¹; 839 ±1 cm⁻¹, 818 ±1 cm⁻¹; 748 ±1 cm⁻¹; 695 ±1 cm⁻¹;
B) from 15 wt% to 45 wt%; of a virgin polypropylene composition comprising:
- (b1) from 75 wt% to 95 wt%, of a propylene homopolymer, having:
- a fraction soluble in xylene at 25°C lower than 6.0 wt%; and
- a Melt Flow Rate (ISO 1133 230°C/5.0 kg) ranging from 0.1 to 6.0 g/10min;
- (b2) from 5 wt% to 25 wt%; of a copolymer of propylene and ethylene having:
- units derived from ethylene, measured according to ¹³C-NMR, in an amount ranging from 25.0 wt% to 68.0 wt%;
said polypropylene composition (B) being further **characterized by**:
- a Melt Flow Rate (ISO 1133 230°C/5.0 kg) ranging from 0.4 to 5.0 g/10 min;
- an amount of fraction soluble in xylene at 25°C ranging from 7.0 wt% to 18.0 wt%;
- intrinsic viscosity fraction soluble in xylene at 25°C, measured in tetrahydronaphthalene at 135 °C, ranging from 1.2 to 7.5 dl/g; and,
- total content of ethylene measured according to ¹³C-NMR method described in the specification, ranging from 4.0 wt% to 10.0 wt%;
in the said composition the sum of b1) and b2), being referred to the total weight of b1) and b2), is 100, and the sum of the amounts of (A) and (B) being referred to the total weight of (A) and (B) is 100.

2. The multilayer film according to claim 1 wherein in the propylene polymer composition the component (A) ranges from 60 wt% to 80 wt%;and component (B) ranges from 20 wt% to 40 wt%.

3. The multilayer film composition according to claims 1 or 2 wherein in the propylene polymer composition component b1) ranges from 81 wt% to 93 wt% and component b2) ranges from 7 wt% to 19 wt %.

4. The multilayer film composition according to any of the preceding claims wherein in the propylene polymer composition component b1) has a Melt Flow Rate (ISO 1133 230°C/5.0 kg) ranging from 0.5 to 2.50 g/10min.

5. The multilayer film composition according to any of the preceding claims wherein in the propylene polymer composition in component b2) the units derived from ethylene, measured according to ¹³C-NMR, range from 41.0 wt% to 57.0 wt%.

6. The multilayer film composition according to any of the preceding claims wherein in the propylene polymer composition component B) has the Melt Flow Rate (ISO 1133 230°C/5.0 kg) ranging from 0.4 to 3.0 g/10min.

7. The multilayer film composition according to any of the preceding claims wherein in the propylene polymer composition component (B) has the amount of fraction soluble in xylene at 25°C ranging from 8.0 wt% to 16.0 wt%.

8. The multilayer film composition according to any of the preceding claims wherein in the propylene polymer composition component (B) has the intrinsic viscosity fraction soluble in xylene at 25°C, measured in tetrahydronaphthalene at 135 °C, ranging from 3.0 to 7.5 dl/g.

9. The multilayer film composition according to any of the preceding claims wherein in the propylene polymer composition component (B) has the total content of ethylene measured according to ¹³C-NMR method ranging from 4.2 wt% to 5.8 wt%.

10. The multilayer film composition according to any of the preceding claims wherein in the propylene polymer composition, component A) has the melt flow rate (ISO 1133-1 230°C/2.16 kg) of the whole component (A) ranging from 0.2 to 20 g/10min.

11. The multilayer film composition according to any of the preceding claims wherein in the propylene polymer composition, component A) has the ethylene derived units content, measured with ¹³C-NMR, comprised between 3.0 wt% and 18.2 wt%.

12. The multilayer film composition according to any of the preceding claims wherein in the propylene polymer composition, component A) has the fraction soluble in xylene at 25°C, determined according to ISO 16152: 2005, lower than 13.0 wt%.

13. The multilayer film composition according to any of the preceding claims wherein in the propylene polymer composition, component A) has the Flexural modulus, measured according to ISO 527-2, ranging from 950 N/mm² to 1550 N/mm².

14. The multilayer film composition according to any of the preceding claims wherein the outer layers comprised a propylene homopolymer.

15. The multilayer film composition according to any of the preceding claims having a structure A/B/A or A/B/C, wherein B is the propylene composition of claims 1-13 and A) or C) are polymers different from B.
